# EUROPEAN PATENT APPLICATION

(11) **EP 1 722 560 A2**
(43) Date of publication of application: **15.11.2006**
(21) Application number: 06007206.3
(22) Date of filing: 05.04.2006
(51) Int. Cl.: H04N 5/655

(54) **Display system and method for controlling rotation angle therefor**

(30) Priority: 09.05.2005 CN 200510072803
(71) Applicant: ASUSTeK Computer Inc., Peitou, Taipei City (TW)
(72) Inventor: Chung, Show-Nan, Taipei, Taiwan (TW)
(74) Representative: Görz, Ingo

(57) **Abstract**

An image display system including an image display device and a remote control is provided. The image display device used for displaying image includes a wireless receiving module, a driving unit and a controlling unit. The remote control includes an adjusting unit and a wireless transmitting module. The adjusting unit is used for adjusting an orientation of displaying face of the image display device. When an adjusting unit acts, the wireless transmitting module converts the corresponding operation signal into a wireless signal and outputs the wireless signal to a wireless receiving module. The wireless receiving module receives and converts the wireless signal into an electric signal, and then outputs the electric signal. The controlling unit controls the driving unit for driving the displaying device to rotate according to the electric signal.

## Description

This application claims the benefit of People's Republic of China application Serial No. 200510072803.9, filed May 9, 2005, the subject matter of which is incorporated herein by reference.

### BACKGROUND OF THE INVENTION

### Field of the Invention

The invention relates in general to an image display system capable of controlling rotation angle, and more particularly to a TV capable of adjusting the orientation of displaying face via a remote control.

### Description of the Related Art

Most of conventional TV sets are normally placed at a TV cabinet ata fixed angle or fastened on a platform. Consequently, the displaying face of TV is oriented towards a fixed direction. However, a user is not always watching the TV from a fixed view angle. The user may need to adjust the orientation of displaying face of the TV according to the sitting arrangement. Particularly, the quality of viewing a liquid crystal TV has much to do with the view angle. In order to achieve a preferred view angle, the user normally has to rotate the TV manually. In terms of a large-scaled TV, the volume is getting bigger and the weight is getting heavier, it is not only demanding but also dangerous trying to rotate a large-scaled TV manually. For example, during the process of moving the TV set, the TV cabinet may be scratched, the setting on the TV set may come off. Furthermore, it is indeed very troublesome to adjust the orientation of displaying face of the TV set whenever the view angle changes.

### SUMMARY OF THE INVENTION

It is therefore an object of the invention to provide an image display system and the method for controlling rotation angle thereof, enabling the user to easily achieve a preferred view angle without having to manually adjust the image display device.

The embodiment of the invention achieves the above-identified object by providing an image display system capable of controlling rotation angle. The image display system includes an image display device and a remote control. The image display device used for displaying image includes a wireless receiving module, a driving unit and a controlling unit. The wireless receiving module receives and converts the wireless signal into an electric signal, and then outputs the electric signal. The controlling unit controls the driving unit for driving the displaying device to rotate according to the electric signal. The remote control includes an adjusting unit and a wireless transmitting module. The adjusting unit is used for adjusting an orientation of displaying face of the image display device. When an adjusting unit acts, the wireless transmitting module converts the corresponding operation signal into a wireless signal, and then outputs the wireless signal to a wireless receiving module.

The embodiment of the invention achieves the above-identified object by further providing a method for controlling rotation angle for an image display system. The image display system has an image display device. The method for controlling rotation angle includes the following steps. An operation signal is transmitted and converted into a wireless signal. The wireless signal is outputted. The wireless signal is received and converted into an electric signal. The targeted orientation of rotation of the image display device of the electric signal is determined, and the orientation of the displaying face of the image display device is adjusted according to the electrical signal.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1 is a block diagram of an image display system capable of controlling rotation angle according to a preferred embodiment of the invention;

FIG. 2 is a diagram of an of image display device of the invention; and

FIG. 3 is an operation diagram of the image display system.

### DETAILED DESCRIPTION OF THE INVENTION

The embodiment of the invention provides an image display system and the method for controlling rotation angle thereof, enabling the user to easily achieve a preferred view angle without having to manually adjust the image display device, thus avoiding associated danger and inconvenience.

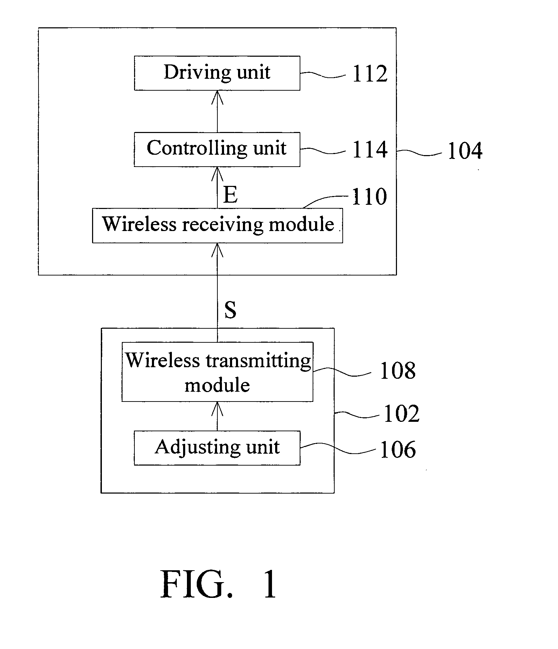

Referring to FIG. 1, a block diagram of an image display system capable of controlling rotation angle according to a preferred embodiment of the invention is shown. Image display system 100 includes a remote control 102 and an image display device 104. The image display device 104 is used for displaying an image on liquid crystal TV, plasma TV or cathode ray tube (CRT) TV or any computer monitor. The image display system 100 according to the invention is applicable to any one of the above-mentioned TV sets and not specific restriction is imposed here.

In addition to the functions of controlling the volume level, channel selection, and power on/off of the above-mentioned TV sets, the remote control 102 further includes an adjusting unit 106 and a wireless transmitting module 108. When the adjusting unit 106 acts, the wireless transmitting module 108 converts the operation signal transmitted by a triggered button into a wireless signal S and then outputs the wireless signal S through wireless transmission.

The image display device 104 includes a wireless receiving module 110, a driving unit 112 and a controlling unit 114. The wireless receiving module 110 receives and converts the wireless signal S into an electric signal E, and then outputs the electric signal. The controlling unit 114, according to the electric signal E, controls the driving unit 112 for driving the image display device 104 to rotate. The driving unit 112 drives the image display device 104 to rotate by a step motor or a direct current motor for instance. The wireless receiving module 110 is preferably a infrared receiving module, and the wireless transmitting module 108 is preferably a infrared transmitting module. The adjusting unit 106 may be equipped with a rightward adjusting button R and a leftward adjusting button L.

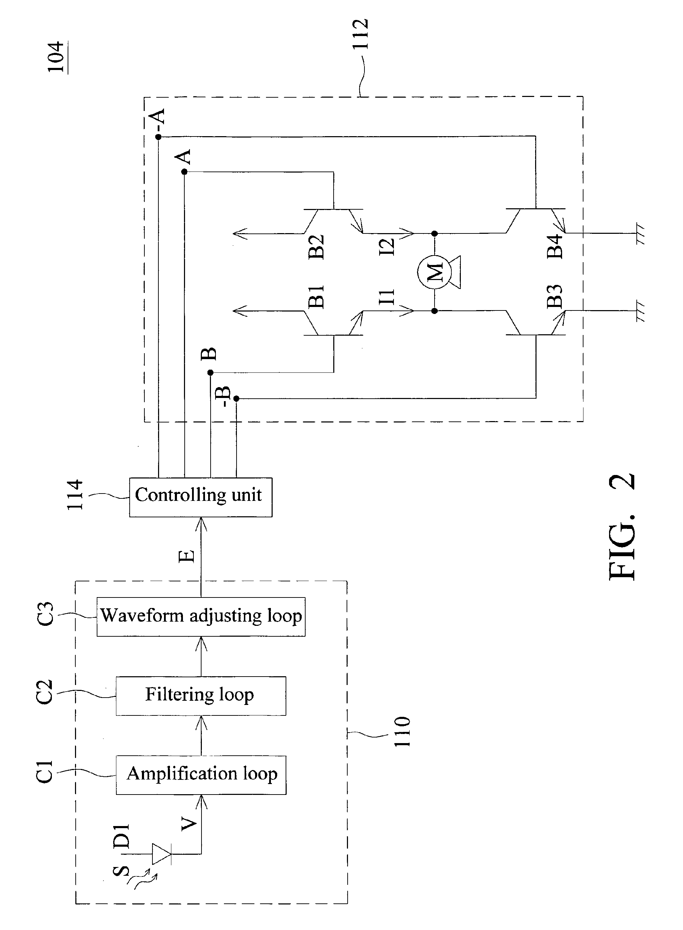

Referring to FIG. 2, a diagram of an of image display device of the invention is shown. The wireless receiving module 110 may include a infrared receiving unit D1, an amplification loop C1, a filtering loop C2 and a waveform adjusting loop C3. The amplification loop C1, the filtering loop C2 and the waveform adjusting loop C3 are referred as back class processing circuit here below. The infrared receiving unit D1 such as an optoeletric diode is used for converting the wireless signal S into an output signal V.
The output signal V is converted into an electric signal E through amplification, filtering and waveform adjusting.

The controlling unit 114 such as a microprocessor is used for determining the targeted orientation of rotation of image display device 104 of the electric signal E, and then controlling the driving unit 112 according to the electric signal. The driving unit 112 includes a number of transistors, such as bipolar junction transistors (BJT) B1, B2, B3 and B4, and a step motor M for instance. -A is a reverse phase signal of A, and -B is a reverse phase signal of B. When A end is at a low voltage and B end receives a high-voltage pulse, the transistor B1 and B4 are conducted while the transistors B2 and B3 are terminated so that the current I1 accordingly drives the step motor M to rotate the image display device 104 towards another direction. To the contrary, when A end receives a high voltage pulse and B end is at low voltage, the transistor B2 is conducted while the transistor B1 is terminated so that the current 12 accordingly drives the step motor M to rotate the image display device towards another direction.

The controlling unit 114, according to the electric signal E, outputs the above-mentioned high-voltage pulse to A end or B end, and controls the rotation angle of the step motor M to rotate the image display device 104 to a corresponding view angle by controlling the number of high-voltage pulses. Another practice for controlling the driving unit 112 is controlling the leftward or rightward rotation of the controlling unit 114 according to whether the outputted pulse is positive or negative. By doing so, the above-mentioned BJTs B1, B2, B3 and B4 can be saved. Besides, the above-mentioned step motor M can be replaced by a direct current motor. The orientation of the displaying face of the image display device 104 can be adjusted to various angles by adjusting the pulse width.

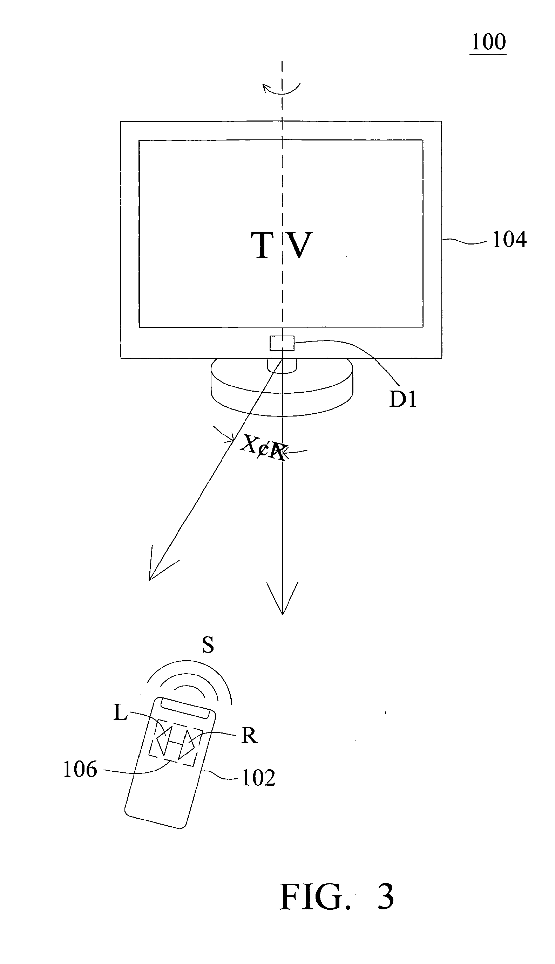

Referring to FIG. 3, an operation diagram of the image display system is shown. As shown in the diagram, when the user would like to rotate the image display device 104 horizontal rotation angle X° to the left of the user, the user has to trigger the adjusting unit 106. When the user presses the leftward adjusting button L, the wireless transmitting module 108 converts the operation signal corresponding to the triggered leftward adjusting button L into a infrared wireless signal S and then outputs the wireless signal. After the processing by the infrared receiving unit D1 and the back class processing circuit, an electric signal E is outputted. The controlling unit 114 determines the electric signal E for driving the image display device 104 to rotate a predetermined angle. Preferably, the on-screen display (OSD) of the image display device 104 correspondingly displays the orientation of the displaying face of the image display device 104, or displays the targeted angle of rotation determined by the user by pressing the leftward adjusting button L or the rightward adjusting button L. If the user would like to have a larger rotation angle, the user can continuously press to trigger the leftward adjusting button L or the leftward adjusting button L until the image display device 104 is rotated to the desired view angle. To the contrary, if the user would like to rotate the image display device rightward, the user only needs to trigger the rightward adjusting button R to rotate the image display device 104 to the desired view angle. The present embodiment does not restrict the adjusting unit 106 to be of any specification, any adjusting unit that is capable of adjusting the orientation of the image display device 104 in response to the operation of the user would do.

The image display system and method for controlling rotation angle according to the invention enable the user to easily achieve a preferred view angle without having to manually adjust the image display device, thus avoiding associated danger and inconvenience. The invention is considerate of human factors.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An image display system capable of controlling rotation angle, comprising:
an image display device used for displaying an image, the image display device comprises:
a driving unit;
a wireless receiving module receiving and converting a wireless signal into an electric signal, and then outputting the electric signal; and
a controlling unit, according to the electric signal, controlling the driving unit for driving the image display device to rotate; and
a remote control, comprising:
an adjusting unit used for adjusting the orientation of the displaying face of the image display device and transmitting an operation signal; and
a wireless transmitting module used for receiving and converting the operation signal into the wireless signal, and then outputting the wireless signal.

2. The display system according to claim 1, wherein, the image display device is a plasma TV.

3. The display system according to claim 1, wherein, the image display device is a liquid crystal TV.

4. The display system according to claim 1, wherein the adjusting unit comprises a rightward adjusting button and a leftward adjusting button, the displaying face of the image display device is oriented directed when the rightward adjusting button acts, and the displaying face of the image display device is oriented leftward when the leftward adjusting button is touched.

5. The display system according to claim 4, wherein, the rightward rotation angle of the orientation of the displaying face of the image display device corresponds to the number of pressings of the rightward adjusting button, and the leftward rotation angle of the orientation of the displaying face of the image display device corresponds to the number of pressings of the leftward adjusting button.

6. The display system according to claim 4, wherein, the image display device further is used for displaying an on-screen display (OSD), which correspondingly displays the orientation of the displaying face of the image display device when the rightward adjusting button or the leftward adjusting button is touched.

7. The display system according to claim 4, wherein, the image display device further is used for displaying an OSD used for displaying a targeted angle of rotation determined by the user by pressing the leftward adjusting button or the rightward adjusting button.

8. The display system according to claim 1, wherein, the wireless receiving module is a infrared receiving module, and the wireless transmitting module is a infrared transmitting module.

9. A method for controlling rotation angle for an image display system, wherein the image display system has an image display device, the method comprises:
transmitting an operation signal;
converting the operation signal into a wireless signal and outputting the wireless signal;
receiving and converting the wireless signal into an electric signal; and
determining the targeted orientation of rotation of the image display device of the electric signal, and then adjusting the orientation of the displaying face of the image display device accordingly.

10. The method for controlling rotation angle according to claim 9, wherein, the image display device is a plasma TV.

11. The method for controlling rotation angle according to claim 9, wherein, the image display device is a liquid crystal TV.

12. The method for controlling rotation angle according to claim 9, wherein the image display system further comprises a driving unit for driving the image display device to rotate.

13. The method for controlling rotation angle according to claim 12, wherein, the image display device further comprises a controlling unit for determining the targeted orientation of rotation of the image display device of the electric signal and controlling the driving unit to adjust the orientation of the displaying face of the image display device according to the electric signal.
